# EUROPÄISCHE PATENTSCHRIFT

(11) **EP 1 532 491 B1**
(45) Veröffentlichungstag und Bekanntmachung des Hinweises auf die Patenterteilung: **14.10.2015**
(21) Anmeldenummer: 03793709.1
(22) Anmeldetag: 08.08.2003
(51) Int. Cl.: G03H 1/00, G03H 1/04, G03H 1/02, G03H 1/08, G03H 1/22, G03H 1/26, G03H 1/28

(54) **HOLOGRAPHISCH-OPTISCHES ELEMENT UND VERFAHREN ZU DESSEN HERSTELLUNG**
HOLOGRAPHIC OPTICAL ELEMENT AND METHOD FOR THE PRODUCTION THEREOF
ELEMENT OPTIQUE HOLOGRAPHIQUE ET SON PROCEDE DE PRODUCTION

(30) Priorität: 12.08.2002 DE 10236891
(43) Veröffentlichungstag der Anmeldung: 25.05.2005
(73) Patentinhaber: Giesecke & Devrient GmbH, 81677 München (DE)
(72) Erfinder: DAUSMANN, Günther, 85630 Grasbunn (DE)
(74) Vertreter: Klunker . Schmitt-Nilson . Hirsch
(86) Internationale Anmeldenummer: PCT/EP2003/008832
(87) Internationale Veröffentlichungsnummer: WO 2004/023220

(56) Entgegenhaltungen:
- GB-A- 2 232 927
- US-A- 3 883 216
- US-A- 5 044 708
- US-A- 5 223 955
- US-A- 5 499 117
- STIRN B A: "RECORDING 360 DEG HOLOGRAMS IN THE UNDERGRADUATE LABORATORY" AMERICAN JOURNAL OF PHYSICS, AMERICAN ASSOCIATION OF PHYSICS TEACHERS, US, Bd. 43, Nr. 4, April 1975 (1975-04), Seiten 297-300, XP009013089 ISSN: 0002-9505
- LEE W-H ET AL: "IMAGING ON CURVED SURFACES" OPTICS COMMUNICATIONS, NORTH-HOLLAND PUBLISHING CO. AMSTERDAM, NL, Bd. 12, Nr. 4, Dezember 1974 (1974-12), Seiten 382-385, XP009021347 ISSN: 0030-4018

## Beschreibung

Die Erfindung betrifft ein Verfahren zur Herstellung eines holographischoptischen Elementes, bei dem eine photoempfindliche Schicht zumindest einmal mit interferierenden Lichtstrahlen belichtet und entwickelt wird, um eine holographische Struktur zu erzeugen. Weiterhin betrifft die Erfindung ein Verfahren zur Herstellung eines holographisch-optischen Elementes, bei dem eine photoempfindliche Schicht mit einem computergenerierten Lichtmuster belichtet und entwickelt wird, das der Belichtung mit interferierenden Lichtstrahlen entspricht. Weiterhin betrifft die Erfindung holographischoptische Elemente, Prägehologrammstrukturen, Fälschungssicherheitselemente und Wertdokumente, die unter Verwendung der erfindungsgemäßen Verfahren hergestellt werden können.

Holographische Strukturen finden heute als Fälschungssicherheitsmerkmal auf verschiedenen Gebieten Anwendung. Das Hologramm an sich ist ein visuelles Prüfmerkmal. Durch mehr oder weniger geschickte Nachahmungen kann der Betrachter jedoch getäuscht werden. Um diese Gefahr zu reduzieren, können speziell ausgestaltete Lesegeräte oder Prüfgeräte eingesetzt werden, um die Echtheit des Hologramms zu verifizieren. In vielen Fällen ist es jedoch nicht möglich oder sinnvoll, Lesegeräte oder Prüfgeräte vorzusehen.

In diesem Zusammenhang ist aus den Schriften US 5,223,955, US 5,499,117, LEE W.-H. "Imaging on Curved Surfaces" Optics Communications, North-Holland Publishing Co. Amsterdam, NL, Bd. 12, Nr. 4, Dezember 1974 (1974-12), Seiten 382-385, ISSN: 0030-4018, US 5,044,708 und GB 2 232 927 die Verwendung gekrümmter Hologrammträger bekannt.

Aufgabe der vorliegenden Erfindung ist es, ein holographisch-optisches Element mit hohem Wiedererkennungswert, aber trotzdem mit hoher Fälschungssicherheit zu erstellen, das ohne zusätzliche Hilfsmittel, wie Lesegeräten o.ä., eine Prüfung erlaubt.

Diese Aufgabe wird durch ein Verfahren mit den Merkmalen des Anspruches 1 gelöst. Vorteilhafte Ausgestaltungen sind Gegenstand der unabhängigen Unteransprüche.

Bei dem Verfahren gemäß Anspruch 1 wird eine photoempfindliche Schicht mit interferierenden Lichtstrahlen belichtet und entwickelt, um eine holographische Struktur zu erzeugen. Erfindungsgemäß wird die photoempfindliche Schicht auf einem flexiblen Substrat vorgegehen und zumindest einmal in gekrümmten Zustand belichtet. Dabei wird die photoempfindliche Schicht mehrfach unter Einstellung unterschiedlicher Krümmungsradien belichtet, um die Fälschungssichercheit weiter zu erhöhen.

Wird das Hologramm in gekrümmten Zustand belichtet, so rekonstruiert es in gleichem Krümmungsradius auch die Information, während es in ebenem Zustand nur noch helle, schmale Zonen zeigt, die nur ein Teil der Objektinformation wiedergeben. Um die in der holographischen Struktur gespeicherte Information bei Beleuchtung mit Rekonstruktionslicht zu erkennen, muss dieses also in den Krümnnungszustand gebracht werden, unter dem die Belichtung stattgefunden hat. Während in ebenem Zustand das holographischoptische Element keine verwertbare Information zeigt, ist die Information in gekrümmten Zustand rekonstruierbar. Diese Ausgestaltung erschwert die Fälschung signifikant und eine Prüfung des holographisch-optischen Elementes ist ohne Lesegeräte oder Prüfgeräte auf einfache Weise visuell möglich. Eine Nachstellung zeigt nur Teile der Information, z.B. können spezielle Bewegungseffekte sowie komplette 3-D-Szenen nicht komplett erfasst bzw. visuell wahrgenommen werden und entlarven somit die Fälschung.

Ein erfindungsgemäßes holographisches Element eignet sich auch zum Aufbringen auf gekrümmte Oberflächen, z.B. Flaschen oder Flaschenverschlüsse, zur Sicherung oder Garantie des echten Inhaltes der Flasche.

Das erfindungsgemäße Verfahren kann zur Erzeugung von Reflexions- oder Transmissionshologrammen eingesetzt werden und zur Fertigung von Volumen- oder Oberflächenhologrammen umgesetzt werden.

Dabei kann als zu speichernde Information entweder ein Objekt oder ein z.B. ebenes Masterhologramm eingesetzt werde, dessen Information auf der gekrümmten Fläche holographisch gespeichert wird.

Zusätzlich zu einem Hologramm, das nur in gekrümmtem Zustand rekonstruiert werden kann, kann eine weitere Hologrammstruktur in ebenem Zustand der photoempfindlichen Schicht einbelichtet werden, die dementsprechend auch eine Information rekonstruiert, wenn das holographisch-optische Element nicht gekrümmt ist. Es entsteht ein so genannter "Flip"-Effekt, der ebenfalls zur Erhöhung der Sicherheit beiträgt.

Bei solchen erfindungsgemäßen holographischen Elementen, bei denen mehrere Belichtungen unter unterschiedlichen Krümmungsradien bzw. zusätzlich in ebenem Zustand vorgenommen werden, können die holographisch gespeicherten Informationen der einzelnen Belichtungen untereinander gleich sein. Auf diese Weise lässt sich überprüfen, ob bei Einstellung der unterschiedlichen Krümmungen tatsächlich auch dasselbe Bild rekonstruiert wird.

Alternativ kann vorgesehen sein, dass die holographisch gespeicherten Informationen, die den einzelnen Belichtungen entsprechen, unterschiedlich sind. Auf diese Weise lassen sich optisch ansprechende, von der Krümmung des holographisch-optischen Elementes abhängige Bildsequenzen erzeugen.

Auch die Sicherheit ist dadurch erhöht, dass unterschiedliche Bilder rekonstruiert werden, die von einem Fälscher schwer nachgeahmt werden können. Das unter einem Verfahren des Anspruches 1 hergestellte holographisch-optische Element zeigt visuell zunächst verzerrte Objekte, die erst bei Krümmung bzw. nach Reproduktion in flexibles Material und dessen Krümmung sichtbar werden.

Die mit diesen besonderen Ausgestaltungen hergestellten holographisch-optischen Elemente zeigen dieselben Vorteile wie die mit zwei interferierenden Lichtstrahlen hergestellten holographisch-optischen Elemente.

Zur Massenproduktion können die mit dem erfindungsgemäßen Verfahren hergestellten holographisch-optischen Elemente als Masterhologramme eingesetzt werden und mithilfe eines Koperschrittes in bekannter Weise reproduziert werden.

Ebenso können die erfindungsgemäßen Verfahren direkt zur Massenproduktion eingesetzt werden.

Die Aufgabe wird auch durch ein holographisch-optisches Element gemäß Anspruch 7 gelöst.

Besonders vorteilhaft wird ein mit den erfindungsgemäßen Verfahren hergestelltes holographisch-optisches Element zur Prägung einer Prägehologrammstruktur auf einem flexiblen Substrat eingesetzt. Dies gestattet auf einfache Weise die Massenproduktion von kostengünstigen Prägehologrammstrukturen, die als Sicherheitsmerkmale eingesetzt werden können.

Eine andere vorteilhafte Ausgestaltung betrifft eine Volumenhologrammstruktur, die mit einem erfindungsgemäßen Verfahren hergestellt worden ist. Schließlich sind auch hybride holographisch-optische Elemente möglich, die sowohl volumenholographische als auch oberflächenholographische Information enthalten.

Besonders vorteilhaft lassen sich die erfindungsgemäßen holographischoptischen Elemente bzw. Prägehologramm- oder Volumenhölogrammstrukturen als Fälschungssicherheitsmerkmal z.B. in Wertdokumenten einsetzen.

Bei allen Ausführungsformen, bei denen mehrere unterschiedliche Krümmungsradien und/oder eine Struktur, die auch in ebenem Zustand rekonstruiert, eingesetzt werden, können die einzelnen Anteile über die gesamte Fläche des Hologrammes belichtet werden oder aber nur jeweilige einzelne Flächenelemente betreffen.

Eine Ausgestaltung der erfindungsgemäßen Verfahren wird im Folgenden im Detail erläutert.

In bekannter Weise wird eine photoempfindliche Schicht der Interferenz eines Objektstrahles und eines Referenzstrahles ausgesetzt, um eine holographische Struktur zu erzeugen, die bei Beleuchtung mit Rekonstruktionslicht das Objekt rekonstruiert. Die photoempfindliche Schicht ist jedoch nicht plan bei der Belichtung, sondern wird dem Lichtmuster in gekrümmtem Zustand ausgesetzt. Auf diese Weise erfolgen gegebenenfalls mehrere Belichtungen unter Einstellung verschiedener Krümmungsradien. Bei der hier beschriebenen bevorzugten Ausführungsform wird zusätzlich eine Belichtung durchgeführt, bei der die photosensitive Schicht eben ist.

Die auf diese Weise belichtete photosensitive Schicht wird entwickelt und fixiert. Die so entstandene Struktur wird z.B. eingesetzt, um in bekannter Weise eine Prägehologrammstruktur auf einem flexiblen Substrat zu erzeugen.

Die fertige Prägehologrammstruktur wird wie folgt eingesetzt. In ebenem Zustand rekonstruiert die Prägehologrammstruktur bei Beleuchtung mit dem entsprechenden Rekonstruktionslicht diejenige Information, die bei der Belichtung der ebenen photosensitiven Schicht holographisch gespeichert wurde. Biegen der Prägehologrammstruktur in einen Krümmungsradius, der dem Krümmungsradius entspricht, unter dem die Belichtung der gekrümmten photosensitiven Schicht erfolgte, lässt die Information rekonstruieren, die in gekrümmtem Zustand des photosensitiven Materials aufgenommen wurde. Auf diese Weise entsteht ein "Flip"-Effekt, der entweder die eine oder die andere Information zeigt, je nach dem, ob das Prägehologramm gekrümmt ist oder nicht.

Das holographisch-optische Element kann anstelle der Belichtung mit zwei interferierenden Lichtstrahlen auch computergeneriert werden, wobei bei der Berechnung der Belichtungsdaten für die Computerbelichtung die Krümmung berücksichtigt werden muss, unter der die Rekonstruktion der holographisch gespeicherten Information bei der Rekonstruktion sichtbar werden soll. Mehrere auf diese Weise computergenerierte Datensätze können kombiniert werden und in einem Belichtungsschritt auf ein ebenes photosensitives Material belichtet werden, das dann wiederum als Vorlage z.B. für eine Prägehologrammstruktur dient.

## Patentansprüche

1. Verfahren zur Herstellung eines holographisch-optischen Elementes, bei dem eine photoempfindliche Schicht zumindest einmal mit interferierenden Lichtstrahlen belichtet und entwickelt wird, um eine holographische Struktur zu erzeugen, wobei die photoempfindliche Schicht auf einem flexiblen Substrat gehalten ist, **dadurch gekennzeichnet, dass** die photoempfindliche Schicht mehrfach unter Einstellung unterschiedlicher Krümmungsradien belichtet wird.

2. Verfahren nach einem der Anspruch 1, bei dem mindestens eine Belichtung in ebenem Zustand vorgenommen wird.

3. Verfahren nach einem der Ansprüche 1 oder 2, bei dem die Belichtungen derart durchgeführt werden, dass die bei den Belichtungen entstandenen holographischen Strukturen dieselbe Information speichern.

4. Verfahren nach einem der Ansprüche 1 oder 2, bei dem die Belichtungen derart ausgewählt sind, dass die bei den Belichtungen entstehenden holographischen Strukturen unterschiedliche Informationen speichern.

5. Verfahren nach einem der Ansprüche 1 bis 4 mit einem anschliessenden holographischen Kopierschritt auf ein flexibles Substrat.

6. Holographisch-optisches Element, das mit einem Verfahren nach einem der Ansprüche 1 bis 5 hergestellt ist.

7. Holographisch-optisches Element mit einem flexiblen Substrat auf dem eine photoempfindliche Schicht gehalten ist, die zumindest einmal mit interferierenden Lichtstrahlen belichtet und entwickelt ist, um eine holographische Struktur zu erzeugen, so dass nur bei Einstellung von verschiedenen vorbestimmten Krümmungen jeweils eine holographisch gespeicherte Information oder unterschiedliche holographisch gespeicherte Informationen rekonstruiert werden können.

8. Holographisch-optisches Element nach Anspruch 7, bei dem zusätzlich eine Information in ebenem Zustand rekonstruiert wird.

9. Prägehologrammstruktur, die unter Einsatz eines mit einem Verfahren nach einem der Ansprüche 1 bis 4 hergestellten holographisch-optischen Elementes auf einem flexiblen Substrat geprägt wurde.

10. Volumenhologrammstruktur, die unter Einsatz eines Verfahrens nach einem der Ansprüche 1 bis 5 hergestellt wurde.

11. Fälschungssicherheitsmerkmal auf einem flexiblen Substrat, mit einem holographisch-optischen Element nach einem der Ansprüche 6 bis 8, einer Prägehologrammstruktur nach Anspruch 9 oder einer Volumenhologrammstruktur nach Anspruch 10.

12. Wertdokument mit einem Fälschungssicherheitsmerkmal nach Anspruch 11.

## Claims

1. A method for manufacturing a holographic-optical element, wherein a photosensitive layer is exposed at least once with interfering light beams and developed, in order to produce a holographic structure, wherein the photosensitive layer is held on a flexible substrate, **characterized in that** the photosensitive layer is exposed several times while adjusting different radii of curvature.

2. The method according to claim 1, wherein at least one exposure is effected in a planar state.

3. The method according to any of the claims 1 or 2, wherein the exposures are effected such that the holographic structures created during the exposures store the same information.

4. The method according to any of the claims 1 or 2, wherein the exposures are chosen such that the holographic structures created during the exposures store different information.

5. The method according to any of the claims 1 to 4, with a subsequent holographic copying step onto a flexible substrate.

6. A holographic-optical element manufactured by a method according to any of the claims 1 to 5.

7. A holographic-optical element with a flexible substrate on which a photosensitive layer is held which is exposed at least once with interfering light beams and developed, in order to produce a holographic structure, such that only upon adjusting different predetermined curvatures respectively one holographically stored information item or different holographically stored information items can be reconstructed.

8. The holographic-optical element according to claim 7, wherein additionally an information item is reconstructed in a planar state.

9. An embossed hologram structure embossed on a flexible substrate using a holographic-optical element manufactured by a method according to any of the claims 1 to 4.

10. A volume hologram structure manufactured using a method according to any of the claims 1 to 5.

11. A falsification protection feature on a flexible substrate, with a holographic-optical element according to any of the claims 6 to 8, an embossed hologram structure according to claim 9 or a volume hologram structure according to claim 10.

12. A value document with a falsification protection feature according to claim 11.

## Revendications

1. Procédé de fabrication d'un élément optique holographique dans lequel une couche photosensible est, au moins une fois, exposée à des rayons lumineux interférents et développée afin de générer une structure holographique, la couche photosensible étant maintenue sur un substrat flexible, **caractérisé en ce que** la couche photosensible est exposée plusieurs fois, lors desquelles les rayons de courbure sont réglés de manière à être différents.

2. Procédé selon la revendication 1, dans lequel au moins une exposition est réalisée dans un état plan.

3. Procédé selon une des revendications 1 ou 2, dans lequel les expositions sont effectuées de telle sorte que les structures holographiques engendrées lors des expositions enregistrent la même information.

4. Procédé selon une des revendications 1 ou 2, dans lequel les expositions sont sélectionnées de telle sorte que les structures holographiques engendrées lors des expositions enregistrent des informations différentes.

5. Procédé selon une des revendications de 1 à 4, comportant une étape ultérieure de copiage holographique sur un substrat flexible.

6. Élément optique holographique qui est fabriqué avec un procédé selon une des revendications de 1 à 5.

7. Élément optique holographique comportant un substrat flexible sur lequel est maintenue une couche photosensible qui, au moins une fois, est exposée à des rayons lumineux interférents et développée afin de générer une structure holographique, de telle sorte que, seulement quand des courbures prédéterminées différentes sont réglées, respectivement une information enregistrée holographiquement ou des informations différentes enregistrées holographiquement peuvent être reconstruites.

8. Élément optique holographique selon la revendication 7, dans lequel, en outre, une information est reconstruite dans un état plan.

9. Structure en hologramme gaufré qui, en utilisant un élément optique holographique fabriqué suivant un procédé selon une des revendications de 1 à 4, fut gaufrée sur un substrat flexible.

10. Structure en hologramme en volume qui fut fabriquée en utilisant un procédé selon une des revendications de 1 à 5.

11. Caractéristique de sécurité contre la contrefaçon sur un substrat flexible, comportant un élément optique holographique selon une des revendications de 6 à 8, une structure en hologramme gaufrée selon la revendication 9 ou une structure en hologramme en volume selon la revendication 10.

12. Document de valeur comportant une caractéristique de sécurité contre la contrefaçon selon la revendication 11.
